# EUROPÄISCHE PATENTANMELDUNG

(11) **EP 1 900 559 A1**
(43) Veröffentlichungstag der Anmeldung: **19.03.2008**
(21) Anmeldenummer: 07018050.0
(22) Anmeldetag: 14.09.2007
(51) Int. Cl.: B60J 5/06, E05B 65/20, B60R 7/04, B60R 5/04, E05F 15/20, A47B 88/04

(54) **Vorrichtung und Verfahren zum Betätigen von angetriebenen Fahrzeugkomponenten**

(30) Priorität: 15.09.2006 DE 102006043351
(71) Anmelder: Kiekert Aktiengesellschaft, 42579 Heiligenhaus (DE)
(72) Erfinder: Jendritza, Daniel, 47802 Krefeld-Traar (DE); Bafundi-Garcla, Pedro, 44143 Dortmund (DE); Sandau, Helmut, 42549 Velbert (DE)

(57) **Zusammenfassung**

Die Erfindung betrifft Vorrichtungen und Verfahren zum Betätigen zumindest einer motorisch angetriebenen Fahrzeugkomponente (2) eines Fahrzeuges (1) mit wenigstens einer Bedieneinrichtungen (8) zum Bewegen der zumindest einen Fahrzeugkomponente (2), wobei wenigstens eine Sensoreinrichtung (19) vorgesehen ist, welche wenigstens einen Bewegungsparameter der Bedieneinrichtung (8) oder eines Bedieners (26) erfasst, um wenigstens zeitweise ein mit zumindest der Beschleunigung oder der Geschwindigkeit korrespondierendes Signal zu erzeugen, welches zur Steuerung zumindest einer Antriebseinrichtung (4,5) der Fahrzeugkomponente (2) und der Bewegungsgeschwindigkeit der Fahrzeugkomponente (2) dient.

## Beschreibung

Die vorliegende Erfindung betrifft eine Vorrichtung zum Betätigen zumindest einer motorisch angetriebenen Fahrzeugkomponente eines Fahrzeuges mit wenigstens einer Bedieneinrichtungen zum Bewegen der zumindest einen Fahrzeugkomponente, wobei wenigstens eine Sensoreinrichtung vorgesehen ist. Daneben betrifft die Erfindung ein Verfahren zum Bewegen wenigstens einer motorisch angetriebenen Fahrzeugkomponente eines Kraftfahrzeuges. Die Erfindung findet insbesondere Anwendung im Automobilbereich.

Im Stand der Technik ist es beispielsweise bekannt, Kraftfahrzeugtüren mit einem elektromotorischen Antrieb auszustatten, welcher nach dein Auslösen einer Bedieneinheit angesteuert wird, um die Fahrzeugtür zu öffnen. Darüber hinaus sind weitere Anwendungen bekannt, bei denen ein Schließsystem mit einer Bedieneinrichtung Verwendung findet, wie etwa bei motorisch angetriebenen Verschlussklappen von Handschuhfächern. Das Öffnen und Schließen dieser Fahrzeugkomponente geht gegebenenfalls mit einer Vielzahl von (vor- und/oder nachgelagerter) Aktionen einher, wie z.B. einer Personenidentifikation, Ver- oder Entriegeln von Schlössern, Überwachung des Schließbereichs, und vieles mehr. All diese Aktionen und Bewegungen betreffend die Fahrzeugkomponente nehmen jedoch eine gewisse Zeit in Anspruch, so dass für den Bediener in bestimmten Situationen unerwünschte Wartezeiten entstehen können.

Hiervon ausgehend ist es Aufgabe der vorliegenden Erfindung eine Vorrichtung und ein Verfahren anzugeben, die einen gegenüber dem bekannten Stand der Technik deutlich erhöhten Bedienkomfort bei gleicher oder sogar verbesserter Bediensicherheit aufweisen.

Diese Aufgaben werden gelöst mit einer Vorrichtung gemäß den Merkmalen des Patentanspruchs 1 sowie einem Verfahren gemäß den Merkmalen des Patentanspruchs 8. Weitere vorteilhafte Ausgestaltungen der Vorrichtung und des Verfahrens sind in den abhängig formulierten Patentansprüchen angegeben. Es ist darauf hinzuweisen, dass die in den Unteransprüchen einzeln aufgeführten Merkmale in beliebiger, technologisch sinnvoller, Weise miteinander kombiniert werden können und weitere Ausgestaltungen der Erfindung definieren.

Die erfindungsgemäße Vorrichtung dient zum Betätigen zumindest einer motorisch angetriebenen Fahrzeugkomponente eines Fahrzeuges mit wenigstens einer Bedieneinrichtungen zum Bewegen der zumindest einen Fahrzeugkomponente. Dabei ist wenigstens eine Sensoreinrichtung vorgesehen, welche wenigstens einen Bewegungsparameter der Bedieneinrichtung oder eines Bedieners erfasst, um wenigstens zeitweise ein mit zumindest der Beschleunigung oder der Geschwindigkeit korrespondierendes Signal zu erzeugen. Dieses Signal dient dann zur Steuerung zumindest einer Antriebseinrichtung der Fahrzeugkomponente und der Bewegungsgeschwindigkeit der Fahrzeugkomponente.

Generell kann die Erfindung an allen Arten von Fahrzeugen, wie etwa Land-, Luft- oder Wasserfahrzeugen, eingesetzt werden. Als angetriebene Fahrzeugkomponenten kommen beispielsweise Türen, Klappen, Fenster, Schiebedächer, Ablage- und Staufächer und Ähnliches in Betracht. Den genannten Fahrzeugkomponenten ist gemein, dass ein Fahrzeuginsasse mit ihnen in unmittelbaren Kontakt gelangt. Als Sensoreinrichtung können beispielsweise Lagesensoren, welche die Bewegung von Türgriffen erfassen oder kapazitive Sensoreinrichtungen, die eine Kapazitätsänderung während der Annäherung einer menschlichen Hand an die Bedieneinrichtung registrieren, eingesetzt werden. Die Bedieneinrichtung stellt bei Fahrzeugtüren in der Regel ein Türaußen- bzw. Türinnengriff dar. Je nach Fahrzeugkomponente kann das Bedienelement aber auch ein Druckschalter oder ein Berührungsschalter sein, um nur einige beispielhaft zu erwähnen.

Der von der Sensoreinrichtung erfasste Bewegungsparameter ist so gewählt, dass daraus auf die Geschwindigkeit oder Beschleunigung der Bedieneinrichtung oder eines Bedieners rückgeschlossen werden kann. Die Erzeugung und Verwendung eines korrespondierenden Signals, welches die Beschleunigungs- bzw. Betätigungsgeschwindigkeit einer Bedieneinrichtung wiedergibt, ermöglicht es davon ein Steuerungsverhalten der Antriebseinrichtungen abzuleiten, welches für einen Bediener weitgehend intuitiv erschließbar ist.

Im einfachsten Fall kommt dabei beispielsweise nur ein einfacher Grenzwert für die Betätigungsgeschwindigkeit bzw. die Betätigungsbeschleunigung zur Anwendung, bei dessen Überschreitung sich ein verändertes Öffnung- bzw. Schließverhalten des Systems einstellt. Eine mögliche und besonders einfache Ausführungsform kann dazu beispielsweise einen Beschleunigungsgrenzwert vorgeben, bei dessen Unterschreiten keine motorisch unterstützende Öffnungsfunktion ausgelöst wird, wohin gegen bei einem Überschreiten des Beschleunigungsgrenzwerts ein motorisch unterstütztes Öffnen mit einer normalen Antriebsgeschwindigkeit ausgeführt wird. Ein Bediener kann so durch langsames Betätigen vorgeben, dass er die Vorrichtung manuell öffnen will. Alternativ kann er durch schnelles Betätigen das Schließsystem aktivieren und so beispielsweise einen motorisch angetriebenen Schließ- bzw. Öffnungsvorgang einleiten.

Eine andere mögliche Ausführungsform kann dagegen vorsehen, dass bei einer langsamen Betätigung beispielsweise eines Bedienelementes (Türgriff und dergleichen) ein normales motorisch unterstütztes Öffnen bzw. Schließen erfolgt, wohin gegen bei einer schnelleren Betätigung einer Bedieneinrichtung ein schnelleres Öffnen bzw. Schließen durchgeführt wird. Zur Ermittlung der Eingangsgröße kann die Betätigungsgeschwindigkeit eines Bedienelements der Bedieneinrichtung oder die Beschleunigung dieses Bedienelementes dienen, genauso wie der Bewegungsparameter eines Bedieners. Einem menschlichen Bediener wird dadurch den Eindruck vermittelt, dass das System entsprechend seinem manuellen Einwirken auf die Bedieneinrichtung mit unterschiedlichen Geschwindigkeiten auf seine Betätigungen reagiert. Der Vorteil der erfindungsgemäßen Ausgestaltung eines Schließsystems besteht darin, dass ein Bediener rein intuitiv die Öffnungs- bzw. Schließfunktionen von Vorrichtungen bedienen kann, wodurch der Bedienkomfort und die Bediensicherheit eine erhebliche Verbesserung erfaren.

Besonders bevorzugt ist dazu eine Vorrichtung, bei der die Sensoreinrichtung als Bewegungsparameter die Geschwindigkeit oder Beschleunigung wenigstens eines Bedienelements der Bedieneinrichtung, insbesondere eines Türgriffes, erfasst. Der Vorteil dieser Ausführungsform besteht darin, dass nur ein Teil eine Bedieneinrichtung mittel einer Sensoreinrichtung zu überwachen ist. Die Erfassung der Geschwindigkeit oder Beschleunigung dieses Bauteils kann somit preisgünstig verwirklicht werden. Darüber hinaus ist es möglich innerhalb einer Bedieneinrichtung bzw. einer erfindungsgemäßen Vorrichtung dasjenige Bedienelement von der Sensoreinrichtung überwachen zu lassen, welches die günstigsten Bauraumverhältnisse bietet. Ist es gefordert, dass die Vorrichtung mit höchstmöglicher Zuverlässigkeit die Bewegungsparameter erfasst, so können Geschwindigkeit, Beschleunigung oder Auslenkung auch gleichzeitig erfasst werden. Wobei aus drei Eingangsmessgrößen in der Regel genauere Rückschlüsse möglich sind als bei zwei oder weniger Eingangsmessgrößen.

Weiterhin wird vorgeschlagen eine erfindungsgemäße Vorrichtung zu verwenden, bei der die Sensoreinrichtung Mittel zur Erfassung einer Lageänderung eines Körperabschnitts eines menschlichen Bedieners erfasst, um daraus die Beschleunigung oder die Geschwindigkeit zur Erzeugung des korrespondierenden Signals zu ermitteln. So kann etwa durch die Überwachung der elektrischen Kapazität einer Bedieneinrichtung die Kapazitätsänderung im Umfeld erfasst werden, welche bei einer manuellen Bedienung auftritt. Greift ein menschlicher Bediener an einen Türgriff eines Kraftfahrzeuges, so verändert er damit dessen elektrische Kapazität. Gemäß der Erfindung kann entsprechend der Änderungsgeschwindigkeit der Kapazität des Türgriffes ein dazu korrespondierendes Signal erzeugt werden, welches zur Steuerung der Öffnungs- bzw. Schließeinrichtungen genutzt wird. Auf diese Weise kann auch eine Bedieneinrichtung, welche ohne mechanische Bedienelemente arbeitet, in der erfindungsgemäßen und vorteilhaften Weise ausgestaltet sein. Auch diese Information erlaubt ggf. eine intuitive Anpassung des Betriebes der Fahrzeugkomponente.

Nach einer anderen Weiterbildung einer erfindungsgemäßen Vorrichtung ist eine Steuerungseinrichtung mit der Sensoreinrichtung verbunden, welche in Abhängigkeit von den Signalen der Sensoreinrichtung unterschiedliche Steuerungsbefehle ausgibt. Steuerungseinrichtungen, insbesondere programmierbare elektronische Steuerungseinrichtungen, sind in modernen Kraftfahrzeugen häufig bereits vorhanden, so dass gegebenenfalls Modifikationen der vorhandenen Software bzw. kleinere Erweiterungen ausreichend sind, um die Erfindung zu implementieren. Darüber hinaus bieten moderne elektronische Steuerungseinrichtungen die Möglichkeit, gleichzeitig zahlreiche andere Funktionen in Abhängigkeit von dem erzeugten korrespondierenden Signal zu steuern. So können in elektronischen Steuerungseinrichtungen unterschiedlichste Funktionen hinterlegt sein, die durchaus auch komplexerer Natur sein können. So ist es damit problemlos möglich, etwa die Öffnungs- bzw. Schließgeschwindigkeit entsprechend einer linearen Funktion in Abhängigkeit zum eingehenden korrespondierenden Signal anzusteuern. Eine andere mögliche Ausführungsform kann darin liegen, die Geschwindigkeiten mittels einer exponentiellen oder logarithmischen Funktion zu ermitteln. Während es sich bei den zuvor genanten Funktionen um kontinuierlich verlaufende Funktionen handelt, können selbstverständlich auch diskrete Funktionen mit Mehrzahlen von Grenzwerten vorgesehen sein. Diese erzeugen nach überschreiten eines Grenzwerts jeweils eine diesem letzten Grenzwert zugewiesene konstante Öffnungs- bzw. Schließgeschwindigkeit. Diese bewirken, dass das Öffnen bzw. Schließen mit der jeweils zugewiesenen Geschwindigkeit erfolgt, solange nicht der nächsthöhere Grenzwert überschritten ist.

Eine ganz besonders bevorzugte Ausgestaltung der Erfindung sieht vor, dass Fahrzeugkomponente eine motorisch angetriebene Fahrzeugschiebetür ist. Bei der Ansteuerung solcher motorisch angetriebenen Fahrzeugschiebetüren, wie sie etwa in modernen Vans zum Einsatz kommen, kann damit in besonders intuitiver und einfacher zu bedienender Weise erfolgen. Wünscht sich der Bediener ein schnelles Öffnen, muss er lediglich das Bedienelement schnell betätigen bzw. schnell darauf zugreifen. Neben den erwähnten motorisch angetriebenen Fahrzeugschiebetüren ist es aber ohne weiteres möglich, auch andere Öffnungs- bzw. Schließvorgänge, insbesondere an Kraftfahrzeugen, mittels der erfindungsgemäßen Schließsystems zu verbessern. Dies können beispielsweise motorisch angetriebene Deckel von Ablagefächern, wie etwa Handschuhfächern, sein oder motorisch ausfahrbare Einrichtungen wie Getränkehalter oder Stau- und Ablagefächer sowie Anhängerkupplungen, um nur einige Beispiele zu nennen.

Zur Gewährleistung eines besonders sicheren Betriebs der Vorrichtung sind Mitteln zur Überprüfung von Nicht-Fahr-Kriterien vorgesehen. Dazu kann bei einer Fahrzeugschiebetür ein Personendetektionseinrichtung, wie sie beispielsweise in Fahrzeugalarmanlagen implementiert ist, dazu dienen den Einstiegsbereich zu überwachen. Ist der Einstiegsbereich dann blockiert, kann die Schließbewegung der Tür solange unterbunden werden, wie der Zustand anhält. Das Nicht-Fahr-Kriterium ist damit die Blockade des Einstiegsbereichs. Die Funktionsweisen der Detektionseinrichtungen können unterschiedlichster Art sein. So kann eine Überwachung etwa mittels Ultraschall-, Infrarot- oder Lichtschrankensensoren geschehen. Grundsätzlich ist hierzu jede geeignete Sensortechnik anwendbar, was im übrigen auch für die Erfassung der Bewegungsparameter gilt. Mit der Überprüfung der Nicht-Fahr-Kriterien ist somit ein sicherer Betrieb der Vorrichtung gewährleistet ist. Neben dem Einstiegsbereich können auch andere Räume überwacht werden, z.B. der Verfahrbereich der Fahrzeugkomponente.

Eine andere besonders komfortable Vorrichtung ist mit wenigstens einer nicht unmittelbar in oder an der Fahrzeugkomponente angeordneten Bedieneinrichtung versehen. Die Bedieneinrichtung kann dazu in einer Fernbedienung, Fernsteuerung oder auch einem Bedienelement im Fahrzeug, wie etwa einem "Panikknopf" angeordnet sein. In der Regel wird ein Betätigungsknopf hierzu die besonders gut geeignet sein, jedoch sind auch Ausführungen als Hebel, Drehknauf, Tastatur bzw. Folientastatur oder sensitiver Anzeigeeinrichtung möglich. Hierdurch kann ein Bediener bereits bei einer Annäherung an sein Fahrzeug den Öffnungsvorgang mit der gewünschten Geschwindigkeit auslösen. Gleiches gilt in umgekehrter Richtung auch für den Schließvorgang.

Das erfindungsgemäße Verfahren zum Bewegen wenigstens einer motorisch angetriebenen Fahrzeugkomponente eines Kraftfahrzeuges auf das sich die Erfindung ferner richtet, umfasst zumindest folgende Schritte:
a) Erfassen wenigstens eines Bewegungsparameters zumindest einer Bedieneinrichtung der Fahrzeugkomponente oder zumindest eines Körperabschnitts eines menschlichen Bedieners,
b) Erzeugen eines zum wenigstens einen Bewegungsparameter korrespondierenden Signals;
c) Ansteuern zumindest einer Antriebseinrichtung der Fahrzeugkomponente zur Erzeugung unterschiedlicher Bewegungsgeschwindigkeiten der Fahrzeugkomponente in Abhängigkeit des Signals.

Diese Verfahren kann beispielsweise mittels der zuvor beschriebenen erfindungsgemäßen Vorrichtungen ausgeführt werden. Eine Realisierung der Erfindung ist aber auch als Software möglich. Diese kann dann etwa durch eine programmierbare Steuerungseinrichtung, wie sie in modernen Fahrzeugen in der Regel bereits vorhanden sind, ausgeführt werden. So kann das erfindungsgemäße Verfahren bei einer besonders einfachen Ausführungsform mit nur zwei zusätzlichen Kontakten ausgeführt werden. Ist in einem Fahrzeug beispielsweise eine motorische angetriebene Seitentür bereits vorhanden, so genügt es am Türgriff zwei Kontakte vorzusehen. Sind diese versetzt angeordnet, so dass sie beim Verschwenken des Türgriffs zeitlich nacheinander ausgelöst werden, können aus der Zeitdifferenz und dem bekannten Verfahrweg die Betätigungsgeschwindigkeit und damit die einzustellende Verfahrgeschwindigkeit der Antriebseinrichtungen bestimmt werden. Wie bereits erwähnt, sie dazu lediglich zwei Kontakte und eine programmiert Steuerungseinrichtung erforderlich, um die Messsignale erfindungsgemäß in Steuersignale umzuwandeln.

Bei bestimmten Anwendungsfällen ist ein Verfahren besonders vorteilhaft, bei dem wenigstens zwei unterschiedliche Signale für unterschiedliche Bewegungsparameterbereiche erzeugt werden. Bei diesen unterschiedlichen Signalen kann es sich etwa um ein Signal handeln, welches die gewünschte Geschwindigkeit angibt und ein weiteres Signal, welches den gewünschten Verfahrweg vorgibt. Bei Heckklappen, insbesondere von großen Fahrzeugen, ist es für kleinere Personen häufig wünschenswert diese nicht vollständig nach oben aufzuschenken. In diesem Fall kann ein Betätigungsgriff mit drei Kontaktstellungen zur Anwendung kommen. Wird der Griff vom ersten Kontakt zum zweiten bewegt, so öffnet die Heckklappe nur teilweise, während bei einer Bewegung des Griffs vom ersten über den zweiten Kontakt zum dritten eine vollständige Öffnung erfolgt. Die Öffnungsgeschwindigkeit wird, wie zuvor beschrieben, aus der Betätigungsgeschwindigkeit des Griffes ermittelt.

Eine besonders sichere Ausführungsform der Erfindung sieht ein Verfahren vor, bei dem mittels einer Sensoreinrichtung eine Beschleunigung oder eine Bewegungsgeschwindigkeit einer Bedieneinrichtung oder des zumindest einen Körperabschnitts des menschliichen Bedieners als Bewegungsparameter erfasst wird, worauf jeweils ein korrespondierendes Signal erzeugt wird, wenn der Bewegungsparameter wenigstens einen vorgegebenen Grenzwert über- oder unterschreitet. Auf diese Weise ist es möglich, eine Notentriegelung an Fahrzeugschiebetüren vorzusehen. Wird dabei das im Fahrzeuginneren oder an der Fahrzeugaußenseite befindliche Bedienelement mit einer besonders hohen Beschleunigung oder mit einer großen Geschwindigkeit betätigt, so können die Antriebseinrichtungen das Öffnen und/oder das Schließen mit einer besonders hohen Geschwindigkeit ausführen.

Eine andere ebenfalls der Sicherheit dienende Ausführungsform der Erfindung sieht ein Verfahren vor, bei dem mittels einer Sensoreinrichtung eine Bewegungsverlauf einer Bedieneinrichtung als Bewegungsparameter erfasst wird, worauf jeweils ein korrespondierendes Signal erzeugt wird, wenn der Bewegungsparameter wenigstens einen vorgegebenen Grenzwert über- oder unterschreitet. So kann etwa eine Mechanik innerhalb des Schließsystems vorgesehen sein, welche es erlaubt, die Bedieneinrichtung unter Anwendung normaler Betätigungskräfte bis zu einem ersten Anschlag auszulenken. Dabei ist es beispielsweise möglich in Abhängigkeit von der Beschleunigung oder der Geschwindigkeit des Bedienelementes unterschiedliche korrespondierende Signale zu erzeugen. Wird das Bedienelement dann in einer Notsituation mit besonders hohen Kräften oder Beschleunigungen bedient, so kann ein weiterer Anschlag an dem Schließsystem vorgesehen sein, der eine größere Auslenkung zulässt und bis zu welchem sich das Bedienelement in diesem Fall bewegen lässt. Beim Überschreiten der Grenzlage des ersten Anschlages können die Antriebseinrichtungen so angesteuert werden, dass sie mit maximaler Geschwindigkeit öffnen bzw. schließen. Hierdurch kann die Verfahrzeit in Notsituationen besonders kurz gehalten werden.

Eine einfache und preiswerte Ausführungsform eines erfindungsgemäßen Verfahrens sieht vor, dass das korrespondierende Signal nur bei einem Öffnungsvorgang erzeugt wird. Hierdurch kann bei Türen oder Fenstern ein Einklemmen von Personen in besonders einfacher Weise verhindert werden. Es ist auch denkbar den Verfahrweg nicht über die gesamte Bewegungsbahn einer Fahrzeugkomponente sondern nur Teilstücke davon zurückzulegen. So können Türen und Fenster auch nur teilweise wieder verschlossen werden, wodurch ein Einklemmschutz ebenfalls gewährleistet ist.

Wie bereits zur im Zusammenhang mit der erfindungsgemäßen Vorrichtung erläutert worden ist, kann auch mit den erfindungsgemäßen Verfahren vorgesehen werden, dass vor Schritt b) oder c) eine Überprüfung der Umgebung auf Nicht-Fahr-Kriterien durchgeführt wird. Hierdurch wird auch beim Verfahren die Sicherheit in der beschriebenen Weise erhöht.

Um einen Bediener, Insassen oder Benutzer vor unerwartet verfahrenden Fahrzeugkomponenten zu warnen, sieht eine andere Ausführungsform der Erfindung vor ab einer vorgegebenen Verfahrgeschwindigkeit der Fahrzeugkomponente ein Warnsignal ausgegeben wird. Dies kann beispielsweise durch ein akustisches oder optisches Warnsignal erfolgen.

Weitere Vorteile der Erfindung sowie deren technisches Umfeld sind im Zusammenhang mit den nachfolgenden Ausführungsbeispielen und der Zeichnung beschrieben. Es zeigt darin schematisch:
- Fig.1:: ein Kraftfahrzeug mit einer erfindungsgemäß gestalteten seitlichen Schiebetür;
- Fig. 2:: eine erste Ausführungsform eines erfindungsgemäßen Bedienelements;
- Fig. 3:: eine zweite Ausführungsform eines erfindungsgemäßen Bedienelements; und
- Fig. 4:: eine dritte Ausführungsform eines erfindungsgemäßen Bedienelements

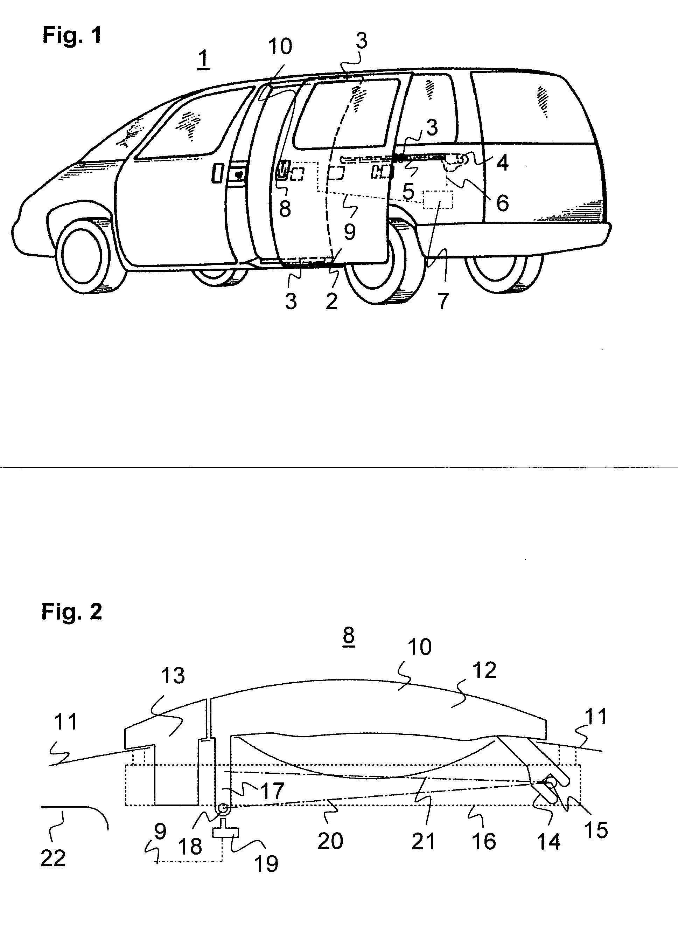

In Fig. 1 ist ein Fahrzeug 1 mit einer Fahrzeugkomponente 2 nach Art einer seitlichen Schiebetür dargestellt. Das Fahrzeug 1 ist mit einem erfindungsgemäßen Öffnungs- bzw. Schließsystem ausgestattet, dessen Bestandteile im Folgenden erläutert werden. Die seitliche Schiebetür ist motorisch angetrieben und in drei Führungsbahnen 3 in Längsrichtung des Fahrzeuges 1 geführt. Am Ende der mittleren Führungsband 3 befindet sich ein elektrischer Motor 4, der über ein Getriebe 5 mit der Schiebetür verbunden ist. Das Getriebe 5 setzt die Drehbewegung der Antriebswelle des Motors 4 in eine Längsbewegung entlang der Führungsbahnen 3 um. Der Motor 4 ist über ein erstes Kabel 6 mit einer Steuerungseinrichtung 7 verbunden. In Fahrtrichtung gesehen, befindet sich an der Vorderkante der Schiebetür (ungefähr auf halber Fahrzeughöhe) eine Bedieneinrichtung 8, über die ein Fahrgast das Öffnen bzw. Schließen der Schiebetür steuert. Die Bedieneinrichtung 8 ist über ein zweites Kabel 9 ebenfalls mit der Steuerungseinrichtung 7 steuerungstechnisch verbunden. Die Bedieneinrichtung 8 selbst weist ein Bedienelement 10 auf, das bei dem dargestellten Ausführungsbeispiel als Griff ausgebildet ist.

Zieht nun ein Bediener an dem Bedienelement 10, so wird die Geschwindigkeit bzw. die Beschleunigung des Bedienelementes 10 erfasst. In Abhängigkeit von der erfassten Geschwindigkeit bzw. Beschleunigung wird dann ein dazu korrespondierendes Signal über das zweite Kabel 9 zur Steuerungseinrichtung 7 weitergeleitet. Die Steuerungseinrichtung 7 erzeugt ein von dem eingehenden Signal abhängiges Ausgangssignal, welches zur Ansteuerung des Motors 4 dient. Die Abhängigkeit zwischen dem über das zweite Kabel 9 eingehenden Eingangssignal und dem über das erste Kabel 6 ausgehenden Ausgangssignal kann beispielsweise mittels einer linearen Funktion vorgegeben werden. Dies bedeutet, dass die Schiebetür gegenüber einer normalen Verfahrgeschwindigkeit doppelt so schnell in den geöffneten Zustand verfahren wird, wenn das Betätigungselement 10 doppelt so schnell betätigt wird wie im normalen Betätigungszustand.

In Fig. 2 ist eine erfindungsgemäße Bedieneinrichtung 8 in einer Schnittansicht dargestellt. Die Bedieneinrichtung 8 ist dabei in einem Türaußenblech 11 eines Fahrzeuges angeordnet. Die Bedieneinrichtung 8 weist als Bedienelement 10 einen Türgriff 12 und einen Schließzylinder 13 auf. Der Türgriff 12 ist an seiner Vorderseite mit einer Gabel 14 versehen, die um einen Drehpunkt 15 drehbar gelagert ist. Zur Befestigung im Türaußenblech 11 ist auf dessen Rückseite ein Rahmen 16 vorgesehen, der der Vollständigkeit halber gezeigt ist und lediglich mit unterbrochenen Linien dargestellt ist. Der Rahmen 16 dient als Gegenlager, um die Bedieneinrichtung 8 sicher am Türaußenblech 11 befestigen zu können. An der der Gabel 14 gegenüberliegenden Seite des Türgriffs 12 befindet sich ein Arm 17, der in Richtung des Fahrzeuginneren weist. Am inneren Ende des Arms 17 ist ein Zapfen 18 angeordnet, der als Mitnehmer für weitere Betätigungselemente der Schließeinrichtung dient. Der Übersichtlichkeit halber wird in der Zeichnung auf die Darstellung der weiteren Einzelteile der Schließeinrichtung verzichtet.

Unterhalb des Zapfens 18 ist ein Sensor 19 angeordnet, der den Abstand zwischen sich und dem Arm 17 erfasst. In der Ruhelage 20 entspricht eine direkte Verbindung zwischen dem Zapfen 18 und dem vorderen Drehpunkt 14 der strichpunktierten Linie. Greift nun ein Bediener nach dem Türgriff 12 und zieht diesen nach außen hin vom Fahrzeug weg, so wird der Zapfen 18 ausgelenkt, bis er in die Position gelangt, welche der mit einer Linie gekennzeichneten Maximalauslenkung 21 entspricht. Diese Linie veranschaulicht also die maximal mögliche Auslenkung des Türgriffes 12. Während der Auslenkung erfasst der Sensor 19 die sich veränderten Abstände zwischen sich und dem Arm 17. In Abhängigkeit von der dazu benötigten Zeit wird eine Auslenkungsgeschwindigkeit bzw. eine Beschleunigung des Türgriffes 12 ermittelt und ein dazu korrespondierendes Signal über das zweite Kabel 9 in Richtung der Steuerungseinrichtung 7 ausgegeben. Diese steuert dann den Motor 4 hier an, so dass dieser die Tür öffnet und in Richtung des Pfeils 22, der gleichzeitig die Bewegungsband vorgibt, die Schiebetür 2 öffnet. Das korrespondierende Signal kann beispielsweise aus einer Vielzahl zeitlich nacheinander gesendeter einzelner Signale oder einem kontinuierlichen und modulierten Dauersignal bestehen.

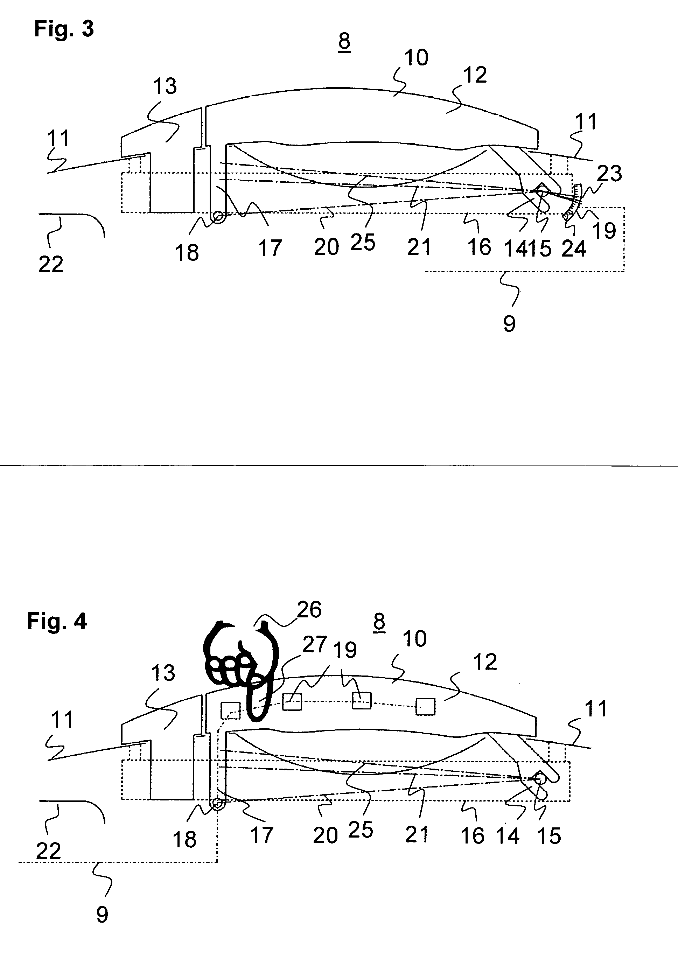

In Fig. 3 ist eine weitere erfindungsgemäß ausgestaltete Bedieneinrichtung 8 dargestellt. Der Aufbau der Bedieneinrichtung 8 entspricht dabei weitestgehend dem zuvor im Zusammenhang mit Fig. 2 beschriebenen Aufbau, weshalb im Folgenden lediglich die andersartig gestalteten Abschnitte beschrieben werden. So ist der Sensor 19 bei dieser Ausführungsform im Bereich des Drehpunktes 15 angeordnet. Es handelt sich dabei um einen Drehgeber, der ähnlich einem Zeiger auf einem Ziffernblatt, die Auslenkung auf einer Skala angibt. Wird nun der Türgriff 12 betätigt und damit ausgelenkt, so wandert ein Zeiger 23 über eine Skala 24. Auch diese Sensoreinrichtung 19 ist wiederum über das zweite Kabel 9 mit der Steuerungseinrichtung 7 steuerungstechnisch verbunden.

Die Erzeugung des korrespondierenden Signals sowie dessen Verarbeitung erfolgt in der gleichen Weise, wie sie zuvor bereits beschrieben wurde. In Abwandlung zu den in Fig. 2 und Fig. 1 beschriebenen Ausführungsbeispielen, weist dieses Ausführungsbeispiel noch eine Notentriegelungsstellung 25 des Türgriffs 12 auf. Bei einer Betätigung des Türgriffs 12 und einer damit verbundenen Bewegung in die Notentriegelungsstellung 25 wird die Antriebseinrichtung zum Öffnen bzw. Schließen der Türen mit der maximal möglichen Geschwindigkeit vorgenommen. Um nun ein versehentliches Betätigen der Antriebseinrichtungen im Notentriegelungsmodus zu verhindern, sind geeignete Mittel, wie z.B. Federn oder Drucksperren vorgesehen, die verhindern, dass mit normalen Betätigungskräften die Notentriegelungsstellung 25 erreichbar ist. Dies sollte nur mit außerordentlich hohen Betätigungskräften der Fall sein. Wie auch bei allen zuvor gezeigten Ausführungsbeispielen kann damit ein Bediener auch mit diesem Schließsystem ein Öffnen bzw. ein Schließen der Türen mit unterschiedlichen Geschwindigkeiten vornehmen. Hierzu ist es lediglich erforderlich, die Schließgeschwindigkeit bzw. Öffnungsgeschwindigkeit durch eine dazu korrespondierende Betätigungsgeschwindigkeit des Bedienelementes 10 der Bedienungseinrichtung vorzugeben.

In Fig. 4 ist schließlich eine Ausführungsform gezeigt, bei der die Sensoreinrichtung 19 die Bewegungsgeschwindigkeit eines menschlichen Bedieners 26 erfasst. Hierbei ist der Türgriff 12 feststehend zur Bedieneinrichtung ausgeführt und kann nur zur Notöffnung, etwa bei Stromausfall, mechanisch bewegt werden. Um nun die Bewegungsgeschwindigkeit eines menschlichen Bedieners 26 zu erfassen, weist die Sensoreinrichtung 19 Mittel auf, welche zur Messung der elektrischen Kapazität des Türgriffs 12 geeignet sind. Greift nun der Bediener 26 mit einem Körperabschnitt 27, wie etwa einem oder mehreren Fingern, nach dem Türgriff 12, oder streicht dieser unterschiedlich schnell mit sinem Körperabschnitt 27 an dem Türgriff 12 und damit an der Sensoreinrichtung 19 vorbei, so ändert sich dadurch dessen elektrische Kapazität. Bereits hierdurch wird ein zur Betätigungsgeschwindigkeit korrespondierendes Signal erzeugt, dass über das zweite Kabel 9 zu einer hier nicht dargestellten Steuerungseinrichtung 7 weitergeleitet wird. Selbstverständlich können vor einer Weiterleitung zur Steuerungseinrichtung 7 grundsätzlich noch Aufbereitungen des Signals erfolgen. Beispielhaft seien hier Verstärkung, Filterung oder Digitalisierung zu nennen, die allesamt in elektronischer Form erfolgen können. Insgesamt somit auch bei unbeweglichen Türgriffen

Im Übrigen wird darauf hingewiesen, dass die vorliegende Erfindung nicht auf die dargestellten Ausführungsbeispielen beschränkt ist. Im Rahmen der Patentansprüche sind viel mehr zahlreiche Abwandlungen der Erfindung möglich. So können beispielsweise anstelle der beschriebenen Öffnungsvorgänge an Schiebetüren von Fahrzeugen auch andere Einsatzmöglichkeiten für die Erfindung gefunden werden. Beispielhaft seien hier motorisch betriebene Verschlussklappen von Handschuhfächern oder motorisch angetriebene Komponente von Innenaustattungsbauteilen, wie etwa elektromotorisch verfahrbare Autoradioblenden, Becherhalter etc. erwähnt.

### Bezugszeichenliste

- 1: Fahrzeug
- 2: Fahrzeugkomponente
- 3: Führungsbahn
- 4: Motor
- 5: Getriebe
- 6: Kabel
- 7: Steuerungseinrichtung
- 8: Bedieneinrichtung
- 9: Kabel
- 10: Bedienelement
- 11: Türaußenblech
- 12: Türgriff
- 13: Schließzylinder
- 14: Gabel
- 15: Drehpunkt
- 16: Rahmen
- 17: Arm
- 18: Zapfen
- 19: Sensor
- 20: Ruhelage
- 21: Maximalauslenkung
- 22: Pfeil
- 23: Zeiger
- 24: Skala
- 25: Notentriegelungsstellung
- 26: Bediener
- 27: Körperabschnitt

## Patentansprüche

1. Vorrichtung zum Betätigen zumindest einer motorisch angetriebenen Fahrzeugkomponente (2) eines Fahrzeuges (1) mit wenigstens einer Bedieneinrichtungen (8) zum Bewegen der zumindest einen Fahrzeugkomponente (2), wobei wenigstens eine Sensoreinrichtung (19) vorgesehen ist, welche wenigstens einen Bewegungsparameter der Bedieneinrichtung (8) oder eines Bedieners (26) erfasst, um wenigstens zeitweise ein mit zumindest der Beschlenigung oder der Geschwindigkeit korrespondierendes Signal zu erzeugen, welches zur Steuerung zumindest einer Antriebseinrichtung (4,5) der Fahrzeugkomponente (2) und der Bewegungsgeschwindigkeit der Fahrzeugkomponente (2) dient.

2. Vorrichtung nach dem vorhergehenden Anspruch, bei der die Sensoreinrichtung (19) als Bewegungsparameter die Geschwindigkeit oder Beschleunigung wenigstens eines *Bedienelements* (10) der Bedieneinrichtung (8), insbesondere eines Türgriffes (12) erfasst.

3. Vorrichtung nach einem der vorhergehenden Ansprüche, bei der die Sensoreinrichtung (19) Mittel zur Erfassung einer Lageänderung eines Körperabschnitts (27) eines menschlichen Bedieners (26) erfasst, um daraus die Beschleunigung oder die Geschwindigkeit zur Erzeugung des korrespondierenden Signals zu ermitteln.

4. Vorrichtung nach einem der vorhergehenden Ansprüche, bei der eine Steuerungseinrichtung (7) mit der Sensoreinrichtung (19) verbunden ist, welche in Abhängigkeit von den Signalen der Sensoreinrichtung (19) unterschiedliche Steuerungsbefehle ausgibt.

5. Vorrichtung nach einem der vorhergehenden Ansprüche, bei der die Fahrzeugkomponente eine motorisch angetriebene Fahrzeugschiebetür (2) ist.

6. Vorrichtung nach einem der vorhergehenden Ansprüche, die Mitteln zur Überprüfung von Nicht-Fahr-Kriterien aufweist.

7. Vorrichtung nach einem der vorhergehenden Ansprüche, mit wenigstens einer nicht unmittelbar in oder an der Fahrzeugkomponente angeordneten Bedieneinrichtung.

8. Verfahren zum Bewegen wenigstens einer motorisch angetriebenen Fahrzeugkomponente (2) eines Kraftfahrzeuges (1) umfassend zumindest folgende Schritte:
a) Erfassen wenigstens eines Bewegungsparameters zumindest einer Bedieneinrichtung (8) der Fahrzeugkomponente (2) oder zumindest eines Körperabschnitts (27) eines menschlichen Bedieners (26),
b) Erzeugen eines zum wenigstens einen Bewegungsparameter korrespondierenden Signals;
c) Ansteuern zumindest einer Antriebseinrichtung (4,5) der Fahrzeugkomponente (2) zur Erzeugung unterschiedlicher Bewegungsgeschwindigkeiten der Fahrzeugkomponente (2) in Abhängigkeit des Signals.

9. Verfahren nach dem vorhergehenden Anspruch, bei dem wenigstens zwei unterschiedliche Signale für unterschiedliche Bewegungsparameterbereiche erzeugt werden.

10. Verfahren nach einem der vorhergehenden Ansprüche, bei dem mittels einer Sensoreinrichtung (19) eine Beschleunigung oder eine Bewegungsgeschwindigkeit einer Bedieneinrichtung (8) als Bewegungsparameter oder des zumindest einen Körperabschnitts (27) des menschlichen Bedieners (26) erfasst wird, worauf jeweils ein korrespondierendes Signal erzeugt wird, wenn der Bewegungsparameter wenigstens einen vorgegebenen Grenzwert über- oder unterschreitet.

11. Verfahren nach einem der vorhergehenden Ansprüche, bei dem mittels einer Sensoreinrichtung (19) eine Bewegungsverlauf einer Bedieneinrichtung (8) als Bewegungsparameter erfasst wird, worauf jeweils ein korrespondierendes Signal erzeugt wird, wenn der Bewegungsparameter wenigstens einen vorgegebenen Grenzwert über- oder unterschreitet.

12. Verfahren nach einem der vorhergehenden Ansprüche, bei dem das korrespondierende Signal nur bei einem Öffnungsvorgang erzeugt wird.

13. Verfahren nach einem der vorhergehenden Ansprüche, bei dem vor Schritt b) oder c) eine Überprüfung der Umgebung auf Nicht-Fahr-Kriterien durchgeführt wird.

14. Verfahren nach einem der vorhergehenden Ansprüche, bei dem ab einer vorgegebenen Verfahrgeschwindigkeit der Fahrzeugkomponente ein Warnsignal ausgegeben wird.

15. Verfahren nach einem der vorhergehenden Ansprüche, bei dem zusätzlich zur Bewegungsgeschwindigkeit die Bewegungsstrecke gesteuert wird.
